# EUROPEAN PATENT APPLICATION

(11) **EP 2 869 541 A1**
(43) Date of publication of application: **06.05.2015**
(21) Application number: 12880229.5
(22) Date of filing: 28.06.2012
(51) Int. Cl.: H04M 1/725

(54) **USER EQUIPMENT AND OPERATION CONTROL METHOD THEREFOR**

(71) Applicant: Meizu Technology Co., Ltd., Zhuhai, Guangdong 519000 (CN)
(72) Inventor: HUANG, Xiuzhang, Zhuhai Guangdong 519000 (CN)
(74) Representative: Cabinet Laurent & Charras
(86) International application number: PCT/CN2012/077719
(87) International publication number: WO 2014/000212

(57) **Abstract**

A user equipment and an operation method therefor can be applied to the field of data processing. The user equipment includes a physical key corresponding to a Home key, an application control unit and a back key display unit; the application control unit is configured to quit or hide a current application of the user equipment when detecting a user operation on the physical key; the back key display unit is configured to display a virtual key corresponding to an operation of returning the user equipment from a newly opened displaying interface to a previous displaying interface of the newly opened displaying interface on the newly opened displaying interface of the user equipment, thereby achieving operation control to the user equipment.

## Description

### FIELD OF THE INVENTION

The present invention relates to a field of data processing, and more particularly relates to a user equipment and an operation control method of the user equipment.

### BACKGROUND OF THE INVENTION

Currently, user operating keys of user equipment such as mobile phone and tablet PC have the following forms: full physical keys, full virtual keys, and physical keys + virtual keys.

The operations of a common user to the user equipment includes: returning operation, quitting the application and hiding the application, etc. The user equipment is provided with a back key corresponding to the returning operation, and a Home key corresponding to quitting the application and hiding the operation. The back key and the Home key are usually physical keys with fixed locations or virtual keys with varied locations, which is not convenient for users to operate the user equipment.

### SUMMARY OF THE INVENTION

A user equipment and an operation control method of the user equipment are provided in the present disclosure, which can facilitate the operation of the user to the user equipment.

A user equipment is provided in the present disclosure, the user equipment includes a physical key corresponding to a Home key, an application control unit and a back key display unit;

the application control unit is configured to quit or hide a current application of the user equipment when a user's operation to the physical key is detected;

the back key display unit is configured to display a virtual key corresponding to an operation of returning the user equipment from a newly opened displaying interface to a previous displaying interface of the newly opened displaying interface on newly opened displaying interface of the user equipment.

An operation control method of a user equipment includes:

quitting or hiding a current application of the user equipment when the user equipment detecting that the user operates a physical key corresponding to a Home key;

displaying a virtual key corresponding to an operation of returning the user equipment from a newly opened displaying interface to a previous displaying interface of the newly opened displaying interface to the newly opened displaying interface when the user equipment opening a new displaying interface.

In the user equipment, the physical key of the Home key which corresponds to quitting the current application or hiding the current application is a fixed physical key, the virtual key corresponding to an operation of returning to the previous displaying interface is displayed on the newly opened displaying interface, which is convenient for a user to operate the user equipment. In addition, in the practical application, the displaying position of the virtual key in the user equipment can be varied, the user can set the displaying position of the virtual key corresponding to the return operation in the user equipment, and the virtual key can be displayed in a position which is convenient for a user to operate.

### BRIEF DESCRIPTION OF THE DRAWINGS

The technical solution of the present invention will be clearly and fully described below with reference to the accompanying drawings. It is obvious that the embodiments to be described are only a part rather than all of the embodiments of the present invention. Persons skilled in the art may derive other embodiments based on the embodiments of the present invention without creative efforts, which all fall within the scope of the present invention.
FIG. 1 is a block diagram of a user equipment according to one embodiment;
FIG. 2 illustrates a new displaying interface of the user equipment according to one embodiment;
FIG. 3 is a block diagram of another user equipment according to one embodiment;
FIG. 4 is a block diagram of the newly displayed interface of the user equipment arranged in another direction according to one embodiment;
FIG. 5 is a block diagram of a setting interface of a virtual key corresponding to the return operation of the user equipment according to one embodiment;
FIG. 6 is a block diagram of a user equipment according to another embodiment;
FIG. 7 is a flow chart of an operation control method of the user equipment according to one embodiment;
FIG. 8 is a flow chart of a step of displaying a virtual key corresponding to the return operation in the operation control method of the user equipment according to one embodiment;
FIG. 9 is a flow chart of a step of displaying a virtual key corresponding to the return operation in the operation control method of the user equipment according to another embodiment.

### DETAILED DESCRIPTION OF THE EMBODIMENTS

To illustrate the technical solution according to the embodiments of the present invention more clearly, the accompanying drawings for describing the embodiments are given briefly below. Apparently, the accompanying drawings in the following description are only some embodiments of the present invention, and persons skilled in the art can derive other drawings from the accompanying drawings without creative efforts.

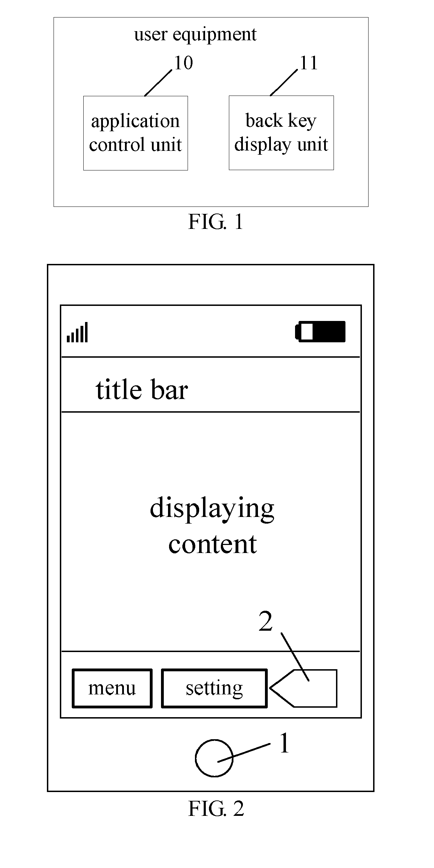

Referring to FIG. 1, an embodiment of a user equipment includes a physical key corresponding to a Home key (not shown in FIG. 1), an application control unit 10 and a back key display unit 11.

The application control unit 10 is configured to quit or hide the current application when the user equipment detects that the user operates the Home key. Specifically, when the application control unit 10 detects that the position of the Home key is in a pressed state, or the application control unit 10 detects that a user operating instruction contains a Home key value, the current application of the user equipment is quit or hidden.

When a new displaying interface is opened by the user equipment, the back key display unit 11 is configured to display a virtual key corresponding to an operation of returning the user equipment from a newly opened displaying interface to a previous displaying interface to the newly opened displaying interface of the user equipment.

Specifically, the displaying information of a virtual key corresponding to an operation of returning the user equipment from newly opened displaying interface to the previous displaying interface of the newly opened displaying interface (hereinafter referred to as return operation) is preset in the user equipment, the displaying information is the position or the icon of the virtual key in the newly opened interface. When the back key display unit 11 detects a user instruction of opening a new displaying interface, the preset displaying information of the virtual key corresponding to the return operation is obtained and displayed on the new displaying interface, an operation corresponding to the displayed virtual key is associated with returning the user equipment from the newly displayed interface to the previous displaying interface. When the user clicks the virtual key corresponding to the return operation, the application control unit 10 or other controlling unit of the user equipment will detect that the position of the virtual key is pressed, or the user equipment detects a user operating instruction contains the virtual key value (e.g. coordinate information on newly displayed interface), the interface displaying unit in the user equipment is controlled to display a previous displaying interface. The position of the virtual key corresponding to the return operation in the newly displayed interface can be varied, the user can set the position of the virtual key according to personal habits. Generally, the virtual key corresponding to the return operation and an original virtual key in the newly displayed interface can be combined to form a hotkey bar to display.

It should be noted that, the physical key corresponding to the Home key can be located on the lower end of the housing of the user equipment. The application control unit 10 and the back key display unit 11 can be functional modules of the user equipment. In practical application, the application control unit 10 and the back key display unit 11 can be implemented by physical equipments such as CPU or GPU etc. The physical equipment loaded with the back key display unit 11 should have image processing capability, thus the virtual key can be displayed.

In the user equipment, the physical key of the Home key which corresponds to quitting the current application or hiding the current application is a fixed physical key, the virtual key corresponding to an operation of returning to the previous displaying interface is displayed on the newly opened displaying interface, which is convenient for a user to operate the user equipment. In the practical application, the displaying position of the virtual key can be varied, the user can set the displaying position of the virtual key corresponding to the return operation in the user equipment, and the virtual key can be displayed in a position which is convenient for a user to operate.

Referring to FIG. 2, the fixed Home key 1 is positioned at the lower end of the housing of the user equipment, and the Home key 1 is positioned outside the touching screen. A hotkey bar is located in the lower end of the newly opened displaying interface of the touching screen of the user equipment, the hotkey bar includes a virtual key 2 corresponding to the returning operation, an original menu key and an original setting key in the newly displayed interface. When the virtual key 2 corresponding to the returning operation is displayed, the virtual key 2 will not affect the displaying content on the newly displayed interface. In other embodiments, in the hotkey bar in the lower end of the newly opened displaying interface of the touching screen, the menu key, the setting key, and the virtual key 2 corresponding to the returning operation can be arranged in other sequence, for example, the virtual key 2 corresponding to the returning operation can be positioned in the left, the menu key can be positioned in the right.

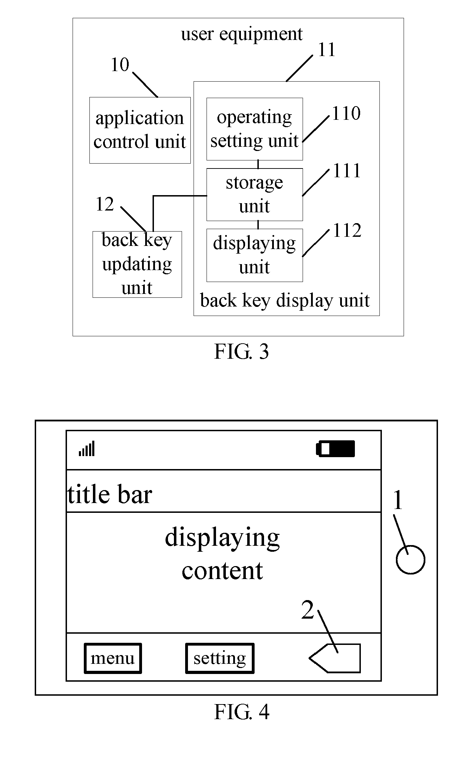

Referring to FIG. 3, in a specific embodiment, based on the user equipment shown in FIG. 1, the back key display unit 11 can be implemented by an operating setting unit 110, a storage unit 111, and a displaying unit 112.

The operating setting unit 110 is configured to provide a setting interface of the virtual key corresponding to the return operation, the setting interface is configured to receive the displaying position of the virtual key input or selected by the user.

The displaying position can include position of a title bar or positions of the lower portion, the upper portion, the left portion, or the right portion of the displaying interface. There are many different ways to set displaying positions in the setting interface, for example, the user inputs the displaying position directly, or the user selects a position from the displaying positions provided by the operating setting unit 110, or the user is prompted to set the displaying position as the usual returning operation key. The setting interface can include a displaying window for inputting the displaying position of the virtual key corresponding to the return operation, and/or information about selecting the displaying position of the virtual key corresponding to the return operation as the lower portion, the upper portion, the left portion, and the right portion of the displaying interface, and/or information about whether to set the displaying position of the virtual key corresponding to the return operation as a usual operating key of the user.

The storage unit 111 is configured to store a corresponding relation between the virtual key corresponding to the return operation and a displaying position of the virtual key selected or input on the setting interface by the user.

When the new displaying interface is opened, the displaying unit 112 is configured to display the virtual key corresponding to an operation of returning the user equipment from the newly opened displaying interface to the previous displaying interface of the newly opened displaying interface to the newly opened displaying interface of the user equipment according to the corresponding relation stored by the storage unit 111.

It should be noted that, the setting interface of the virtual key corresponding to the return operation provided by the setting operating unit 110 is also configured to receive a virtual key corresponding to the return operation icon selected or input by the user. The storage unit 111 is also configured to store a corresponding relation between the virtual key corresponding to the return operation and a virtual key icon received by the setting interface provided by the operating setting unit 110.

Furthermore, the setting interface of the virtual key corresponding to the return operation provided by the operating setting unit 110 is also configured to receive updating information of the displaying position of the virtual key corresponding to the return operation set by the user. The storage unit 111 is also configured to store a corresponding relation between the virtual key corresponding to the return operation and updating information of the displaying position received by the setting interface provided by the operating setting unit 110. The updating information of the displaying position is the position changing information of the virtual key corresponding to the return operation on the displaying interface. For example, when a displaying orientation of the newly opened displaying interface of the user equipment changes, the displaying position of the virtual key corresponding to the return operation changes. In this situation, the user equipment further includes a back key changing unit 12. When the displaying orientation of the newly opened displaying interface is detected to be changed, the back key changing unit 12 is configured to display the virtual key according to the updating information of the displaying position stored by the storage unit 111 of the back key display unit 11.

Referring to FIG. 4, when the back key changing unit 12 detects that the new displaying interface changes from a vertical displaying mode to a horizontal displaying mode, i.e. the new displaying interface has rotated 90°, the back key changing unit 12 needs to change the displaying position of the virtual key corresponding to the return operation, specifically, the virtual key corresponding to the return operation is rotated 90° with the displaying interface to display.

It is to be understood that, the setting information related to the virtual key corresponding to the return operation can be received on the setting interface provided by the operating setting unit 110. Furthermore, the displaying position, the icon, and the updating information of the displaying position of the virtual key corresponding to the return operation can be set by a setting interface provided by the operating setting unit 110, in a specific embodiment, they can also be set by different setting interfaces provided by different operating setting units. For example, one operating setting unit provides a setting interface for setting the displaying position, the other operating setting unit provides a setting interface for setting the icon.

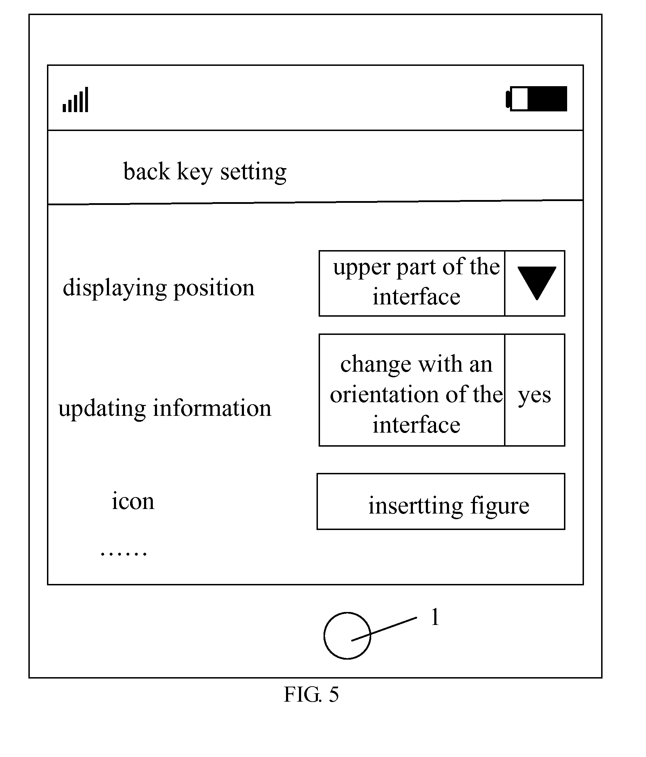

Referring to FIG. 5, the setting interface of the virtual key corresponding to the return operation provided by the operating setting unit 110 includes a title bar "back key setting", following items can be set: "displaying position", "updating information", and "icon" etc. Thus the user can select a displaying position from the items to be selected of the setting box corresponding to "displaying position", for examples the items to be selected are inverted triangle drop-down menu, the displaying position is the upper portion of the displaying interface. The user can select "yes" from items to be selected in the setting box corresponding to "updating information" such as selecting whether to change as the changing of the displaying orientation of the displaying interface. When the user clicks on the setting box corresponding to "icon", a stored icon in the existing folder is imported.

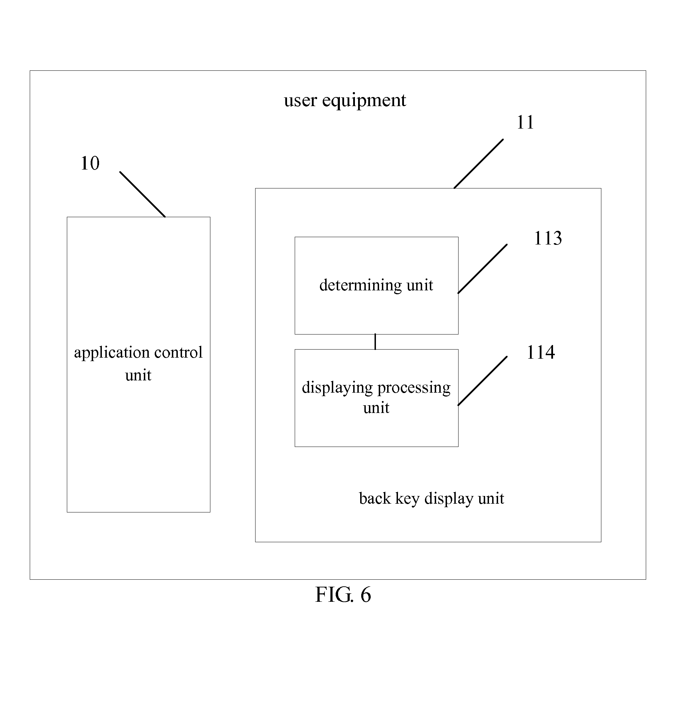

Referring to FIG. 6, in another specific embodiment, based on a structure of the user equipment shown in FIG. 1, the back key display unit 11 can be implemented by a determining unit 113 and a displaying processing unit 114.

The determining unit 113 is configured to determine whether a virtual key corresponding to an operation of returning to an application home page of the newly opened displaying interface exists on the newly opened displaying interface before the new displaying interface is opened. The displaying processing unit 114 is configured to replace the virtual key to a virtual key corresponding to an operation of returning the user equipment from the newly opened displaying interface to the previous displaying interface and display the replaced virtual key when the determining unit 113 determines that there exists the virtual key on the newly opened displaying interface.

It is to be understood that, the virtual key corresponding to the operation of returning to the application homepage of the newly opened displaying interface might exists on the newly opened displaying interface, the virtual key might be repeated in some extent with the Home key on the housing of the user equipment. Before the user equipment displays the newly opened displaying interface, the determining unit 113 of the back key display unit 11 will determine whether there exists the virtual key corresponding to the operation of returning to the application home page of the newly opened displaying interface, if so, the displaying processing unit 114 will perform the above replacing and displaying process when displaying the new displaying interface. Specifically, the displaying processing unit 114 can completely replace an icon and a corresponding operation of the virtual key corresponding to an operation of returning to the application home page the newly opened displaying interface, i.e. the icon of the virtual key corresponding to an operation of returning the user equipment from the newly opened displaying interface to the previous displaying interface is displayed in the position of the virtual key corresponding to an operation of returning to the application home page of the newly opened displaying interface in the new displaying interface. And the displayed virtual key is corresponded to an operation of returning the user equipment from the newly opened displaying interface to the previous displaying interface. The displaying processing unit 114 can only replaces a corresponding operation of the virtual key corresponding to an operation of returning to the application home page of the newly opened displaying interface, and do not replace the icon of the virtual key. i.e. the icon of the virtual key corresponding to an operation of returning to the application home page of newly opened displaying interface in the new displaying interface is associated with an operation of returning the user equipment from the newly opened displaying interface to the previous displaying interface.

It should be noted that, the user equipment of the illustrated embodiment is described in the form of function modules, in the practical application, the above function modules can be implemented by physical equipments of the user equipment, e.g. CPU, GPU, and memory. For example, the application control unit 10 can be implemented by the CPU. The back key display unit 11 can be implemented by the GPU or the memory. As the combination ways and the connection ways of the physical equipments vary, the user equipment may have more operating ways, for example, the operating way is implemented by integrating the CPU and the GPU, which is not limited in the illustrated embodiment.

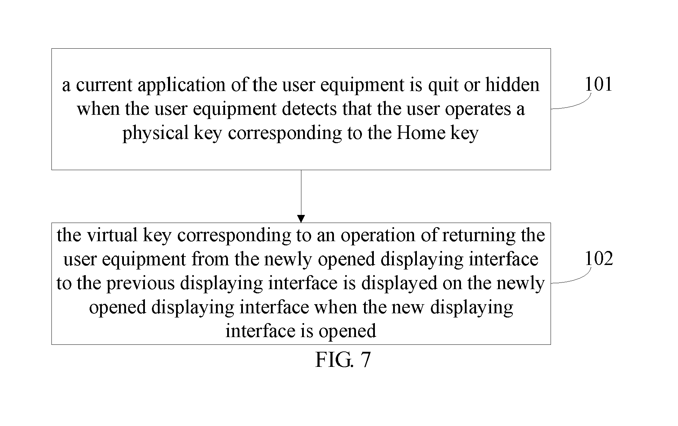

An operation control method of the user equipment is also provided in the illustrated embodiment, the method is executed by the user equipment shown as FIG. 1 through FIG. 6, a flow chart of the method is shown in FIG. 7.

Step 101, a current application of the user equipment is quit or hidden when the user equipment detects that the user operates a physical key corresponding to the Home key, for example, the user equipment detects that the Home key is in a pressed state. Home is only a mark of the physical key.

Step 102, the virtual key corresponding to an operation of returning the user equipment from the newly opened displaying interface to the previous displaying interface is displayed on the newly opened displaying interface when the new displaying interface is opened. When the user clicks on the virtual key corresponding to the return operation, the user equipment will detect a user operating instruction contains the key value of the virtual key corresponding to the return operation (e.g. coordinate information on the newly opened displaying interface), i.e. the interface displaying unit of the user equipment is controlled to display the previous displaying interface. The displaying position of the virtual key corresponding to the return operation on the new displaying interface can be changed, the displaying position can be set according to personal habits, under normal circumstance, the virtual key corresponding to the return operation and the original virtual key on the new displaying interface can be combined to form a hotkey bar to display.

It is to be noted that, the step 101 and the step 102 do not have a strict sequence, they can be executed parallelly or they can be executed sequentially. FIG. 7 illustrates only a specific embodiment.

In the illustrated embodiment, the Home key i.e. a key corresponding to an operation of quitting or hiding the current application is a fixed physical key. The virtual key corresponding to an operation of returning to the previous displaying interface will be displayed on the newly opened displaying interface of the user equipment, which facilitates the operation of the user equipment. In addition, in practical application, the displaying position of the virtual key of the user equipment is usually capable of changing, thus the user can set the displaying position of the virtual key corresponding to the return operation, the virtual key corresponding to the return operation can then be displayed to a place which is convenient for a user to operate.

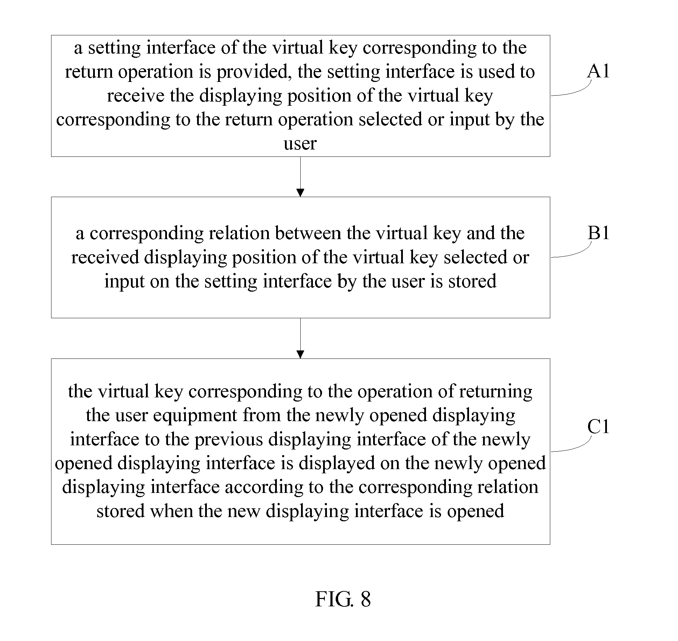

Referring to FIG. 8, in a specific embodiment, the step 102 can be executed in the following steps.

Step A1: a setting interface of the virtual key corresponding to the return operation is provided, the setting interface is configured to receive the displaying position of the virtual key corresponding to the return operation selected or input by the user. The displaying position can include the position of the title bar of the displaying interface, the lower portion, the upper portion, the left portion, or the right portion of the displaying interface. The setting interface can include a displaying window of the displaying position of the virtual key corresponding to the return operation, and/or include information of selecting the displaying position of the virtual key corresponding to the return operation as the lower portion, the upper portion, the left portion, and the right portion of the displaying interface, and/or include information of whether to set the displaying position of the virtual key corresponding to the return operation as a usual operating key of the user.

Step B 1: a corresponding relation between the virtual key and the received displaying position of the virtual key selected or input on the setting interface by the user is stored.

Step C1: the virtual key corresponding to the operation of returning the user equipment from the newly opened displaying interface to the previous displaying interface of the newly opened displaying interface is displayed on the newly opened displaying interface according to the corresponding relation stored in step B1 when the new displaying interface is opened.

Furthermore, in the illustrated embodiment, the user cannot only set the displaying position of the virtual key corresponding to the return operation, but also set the displaying icon and the updating information of the displaying position of the virtual key corresponding to the return operation. The updating information of the displaying position refers to the position changing information of the virtual key corresponding to the return operation on the displaying interface, for example, when the displaying orientation of the newly opened displaying interface changes, the displaying position of the virtual key corresponding to the return operation changes. In this situation, the virtual key corresponding to the return operation is displayed according to the stored updating information of the displaying position when the user equipment detects that the displaying orientation of the newly opened displaying interface changes. For example, the virtual key corresponding to the return operation is rotated 90° with the displaying interface.

Specifically, the setting interface provided by the user equipment in step A1 is also configured to receive the icon of the virtual key selected or input by the user, the user equipment also needs to store a corresponding relation between the virtual key corresponding to the return operation and the icon of the virtual key received by the setting interface. In the specific embodiment, the user equipment can provide different setting interface to set displaying information related to the virtual key corresponding to the return operation.

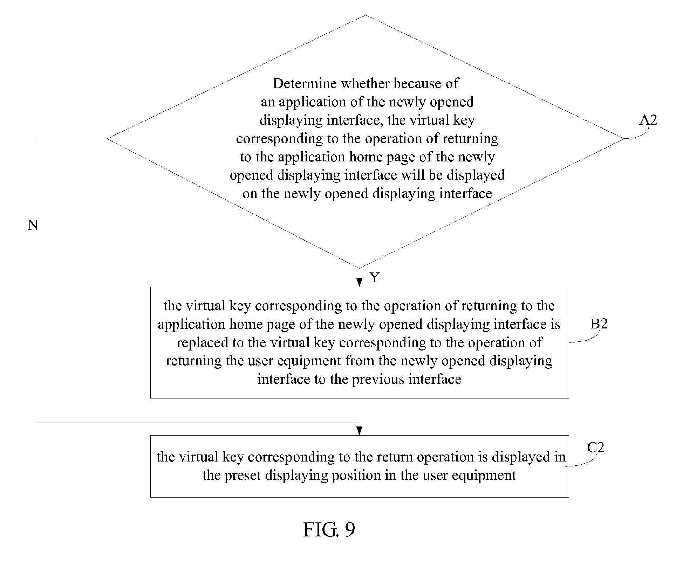

Referring to FIG. 9, in another specific embodiment, the user equipment can execute the step 102 in the following steps.

A2: before the user equipment opens the new displaying interface, determine whether because of an application of the newly opened displaying interface, the virtual key corresponding to the operation of returning to the application home page of the newly opened displaying interface will be displayed on the newly opened displaying interface, if so, the virtual key will be repeated in some extent with the fixed Home key on the housing of the user equipment, in order to make the space for displaying main content in the displaying interface larger, the user equipment can execute step B2, if not, the user equipment execute step C2.

B2: the virtual key corresponding to the operation of returning to the application home page of the newly opened displaying interface is replaced to the virtual key corresponding to the operation of returning the user equipment from the newly opened displaying interface to the previous interface, and the virtual key corresponding to the operation of returning the user equipment from the newly opened displaying interface to the previous displaying interface is displayed. Specifically, the user equipment can display the icon of the virtual key corresponding to the operation of returning the user equipment from the newly opened displaying interface to the previous displaying interface in the position of the virtual key corresponding to the operation of returning to the application home page of the newly opened displaying interface in the newly opened displaying interface, and the displayed virtual key is associated with an operation of returning the user equipment from the newly opened displaying interface to the previous displaying interface, or the user equipment can directly associate the icon of the virtual key corresponding with an operation of returning to the application home page of the newly opened displaying interface in the newly opened displaying interface with an operation of returning the user equipment from the newly opened displaying interface to the previous displaying interface. And the icon of the virtual key corresponding to the operation of returning to the application home page of the newly opened displaying interface is not changed.

C2: the virtual key corresponding to the return operation is displayed in the preset displaying position in the user equipment.

In the illustrated embodiment, the displaying position of the virtual key corresponding to the operation of returning the user equipment from the newly opened displaying interface to previous displaying interface in the newly opened displaying interface is not changed, which is convenient for the users to set the displaying position according to their need and also convenient for the user to operate the user equipment.

Persons skilled in the art should understand that all or a part of the steps of the method according to the embodiments of the present invention may be implemented by a program instructing relevant hardware. The program may be stored in a computer readable storage medium. The storage medium may be a read only memory (ROM), a random access memory (RAM), a magnetic disk, or an optical disk.

Although the present invention has been described with reference to the embodiments therefor and the best modes for carrying out the present invention, it is apparent to those skilled in the art that a variety of modifications and changes may be made without departing from the scope of the present invention, which is intended to be defined by the appended claims.

## Claims

1. A user equipment, comprising:
a physical key corresponding to a Home key;
an application control unit configured to quit or hide a current application of the user equipment when detecting a user operates the physical key; and
a back key display unit;
wherein when the user equipment opens a new displaying interface, the back key display unit is configured to display a virtual key corresponding to an operation of returning the user equipment from a newly opened displaying interface to a previous displaying interface of the newly opened displaying interface on the newly opened displaying interface of the user equipment.

2. The user equipment according to claim 1, wherein the back key display unit comprises:
an operating setting unit configured to provide a setting interface of the virtual key,
wherein the setting interface is configured to receive a displaying position of the virtual key selected or input by the user;
a storage unit configured to store a corresponding relation between the virtual key and
a displaying position of the virtual key selected or input on the setting interface by the user received by the operating setting unit;
a displaying unit configured to display the virtual key corresponding to an operation of returning the user equipment from the newly opened displaying interface to the previous displaying interface of the newly opened interface on the newly opened displaying interface of the user equipment according to the corresponding relation stored by the storage unit when a new displaying interface is opened by the user equipment.

3. The user equipment according to claim 2, wherein a setting interface of the virtual key provided by the operating setting unit is also configured to receive an icon of the virtual key selected or input by the user, the storage unit is also configured to store a corresponding relation between a virtual key icon received by the setting interface provided by the operating setting unit and the virtual key.

4. The user equipment according to claim 2, wherein the setting interface of the virtual key provided by the operating setting unit is also configured to receive updating information of the displaying position of the virtual key set by the user, the storage unit is also configured to store a corresponding relation between the virtual key and the updating information of the displaying position received by the setting interface provided by the operating setting unit.

5. The user equipment according to claim 4, wherein the updating information of the displaying position of the virtual key comprises: change of the displaying position of the virtual key when displaying orientation of the newly opened displaying interface changes;
the user equipment further comprises a back key changing unit configured to display the virtual key according to the updating information of the displaying position stored by the storage unit of the back key display unit when the displaying orientation of the new displaying interface opened by the user device changes.

6. The user equipment according to any one of claims 2 to 5, wherein the displaying position of the virtual key comprises a title bar of the displaying interface, the lower portion, the upper portion, the left portion, or the right portion of the displaying interface;
the setting interface comprises a displaying window for inputting the displaying position of the virtual key, and/or information about selecting a displaying position of the virtual key as a lower portion, an upper portion, a left portion, and a right portion of the displaying interface, and/or information about whether to set a displaying position of the virtual key as a usual returning operation key of the user.

7. The user equipment according to claim 1, wherein the back key display unit comprises:
a determining unit configured to determine whether the virtual key corresponding to the operation of returning to the application home page of the newly opened displaying interface exists on the newly opened displaying interface before the new displaying interface is opened by the user equipment;
a displaying processing unit configured to replace the virtual key by another virtual key corresponding to the operation of returning the user equipment from the newly opened displaying interface to the previous displaying interface and display the replaced virtual key when the determining unit determines the virtual key exists on the newly opened displaying interface.

8. The user equipment according to claim 7, wherein the displaying processing unit is specifically configured to display an icon of the virtual key corresponding to an operation of returning the user equipment from the newly opened displaying interface to the previous displaying interface in a position of a virtual key corresponding to an operation of returning to the application home page of the newly opened displaying interface, and the displayed virtual key is associated with an operation of returning from the newly opened displaying interface to the previous displaying interface; or the displaying processing unit is specifically configured to associate the icon of the virtual key corresponding to an operation of returning to the application home page of the newly opened displaying interface with an operation of returning from the newly opened displaying interface to the previous displaying interface.

9. An operation control method of a user equipment, comprising:
quitting or hiding a current application of the user equipment when the user equipment detecting that the user operates a physical key corresponding to a Home key;
displaying a virtual key corresponding to an operation of returning the user equipment from a newly opened displaying interface to a previous displaying interface of the newly opened displaying interface to the newly opened displaying interface when the user equipment opening a new displaying interface.

10. The method according to claim 9, wherein the displaying the virtual key corresponding to an operation of returning the user equipment from the newly opened displaying interface to the previous displaying interface of the newly opened displaying interface to the newly opened displaying interface comprises:
providing a setting interface of the virtual key, the setting interface is configured to receive a displaying position of the virtual key selected or input by a user;
storing a corresponding relation between the virtual key and the received displaying position of the virtual key selected or input on the setting interface by the user;
displaying the virtual key corresponding to the operation of returning the user equipment from the newly opened displaying interface to the previous displaying interface of the newly opened displaying interface to the newly opened displaying interface according to the corresponding relation when the user equipment opens a new displaying interface.

11. The method according to claim 10, wherein the setting interface of the virtual key is further configured to receive an icon of the virtual key selected or input by a user, the method further comprises: storing a corresponding relation between the virtual key and the icon of the virtual key received by the setting interface.

12. The method according to claim 10, wherein the setting interface of the virtual key is further configured to receive updating information of the displaying position of the virtual key set by the user, the method further comprises: storing a corresponding relation between the virtual key and the updating information of the displaying position received by the setting interface.

13. The method according to claim 12, wherein the updating information of the displaying position of the virtual key comprises: change of the displaying position of the virtual key, when a displaying orientation of the newly opened displaying interface changes;
the method further comprises: when the displaying orientation of the new displaying interface changes, displaying the virtual key according to stored updating information of the displaying position.

14. The method according to any one of claims 10 to 13, wherein the displaying position of the virtual key comprises: a title bar of the displaying interface, or the lower portion, the upper portion, the left portion, or the right portion of the displaying interface;
the setting interface comprises a displaying window for inputting the displaying position of the virtual key, and/or comprises information about selecting the displaying position of the virtual key as the lower portion, the upper portion, the left portion, the right portion of the displaying interface, and/or comprises information about whether to determine the displaying position of the virtual key as a usual back key of the user.

15. The method according to claim 9, wherein the displaying a virtual key corresponding to an operation of returning the user equipment from the newly opened displaying interface to a previous displaying interface of the newly opened displaying interface to the newly opened displaying interface comprises:
determining whether a virtual key corresponding to an operation of returning to the newly opened displaying interface exists on the newly opened displaying interface, if so, replacing the virtual key corresponding to the operation of returning to the newly opened displaying interface to the virtual key corresponding to an operation of returning the user equipment from the newly opened displaying interface to the previous displaying interface.

16. The method according to claim 15, wherein the replacing the virtual key corresponding to the operation of returning to the newly opened displaying interface to the virtual key corresponding to the operation of returning from the newly opened displaying interface to the previous displaying interface comprises:
displaying a virtual key icon corresponding to an operation of returning from the newly opened displaying interface to the previous displaying interface in a position of the virtual key corresponding to the operation of returning to the newly opened displaying interface on the newly opened displaying interface, and associating the displayed virtual key with an operation of returning from the newly opened displaying interface to the previous displaying interface; or
associating a virtual key icon corresponding to an operation of returning to the newly opened displaying interface on the newly opened displaying interface with an operation of returning the user equipment from the newly opened displaying interface to the previous displaying interface.
